# EUROPEAN PATENT APPLICATION

(11) **EP 4 491 694 A1**
(43) Date of publication of application: **15.01.2025**
(21) Application number: 23306173.8
(22) Date of filing: 10.07.2023
(51) Int. Cl.: C09K 11/02, C09K 11/77, C09K 11/87, C09K 11/88, H05B 33/14, H05B 33/20

(54) **COMPOSITE PARTICLES**

(71) Applicant: Nexdot, 93230 Romainville (FR)
(72) Inventor: D`AMICO, Michele, 93230 Romainville (FR); LIN, Yu-Pu, 93230 Romainville (FR); DUBERTRET, Benoit, 93230 Romainville (FR)
(74) Representative: Icosa

(57) **Abstract**

The present invention relates to a composite particle comprising nanoparticles dispersed in a metal oxide matrix comprising alumina and zirconia.

## Description

### FIELD OF INVENTION

The present invention relates to composite particles comprising nanoparticles dispersed in a metal oxide matrix comprising zirconia and optionally alumina.

### BACKGROUND OF INVENTION

Semiconductor nanocrystals, commonly called "quantum dots", are widely known as emissive materials. Their narrow fluorescence spectra - approximately 30 nm full width at half maximum - saturated colors and the possibility to tune their fluorescence in the entire visible spectrum as well as in the infrared make them excellent candidates for integration in displays as phosphors. Such semiconductors are also very efficient and selective high-pass filters. Indeed, absorbance is high for wavelength of high energy, *i.e.*, short wavelengths. On the contrary, absorbance for wavelength of low energy, *i.e.*, long wavelengths, is low. The transition between both domains of high and low absorbance is usually sharp and the transition wavelength is defined by the electronic properties of the semiconductor nanocrystal.

However, when exposed to air and moisture, quantum dots undergo oxidative damage, often resulting in a strong decrease of photoluminescence quantum yield (PLQY) or degradation of filtering properties. The use of quantum dots in light converting layers tends to expose said quantum dots to elevated temperatures, high light intensity and flux, and/or environmental deteriorating species such as water or oxygen.

To ensure a high long-term stability, further chemical reaction between the surface of nanoparticles and environmental deteriorating species such as water, oxygen, or other harmful compounds, must be prevented during their use. However, the ligands commonly used to functionalize the surface of quantum dots do not protect efficiently said surface against reactions with deteriorating species or harmful compounds and thus do not enable the long-term performance required.

Especially, nanoparticles should demonstrate a high stability in time and in temperature, under a high photon flux. By stability, it is meant for instance that PLQY remains stable during use, or that the nanoparticles do not undergo photobleaching. Such performances are especially desired for display or lighting devices such as diodes, Light Emitting Diodes (LED), or organic light-emitting diode (OLED).

It is known to coat inorganic nanoparticles with a protective shell to prevent deteriorating species or harmful compounds from reaching said nanoparticles surface. Silica is known to be an insulator protective material for inorganic nanoparticles. However, shells consisting mainly of silica are not totally satisfying.

It is therefore an object of the present invention to provide composite particles with enhanced resistance to photobleaching, enhanced resistance to light flux, or enhanced stability over temperature, environment variations or deteriorating species, like water and oxygen, or other harmful compounds. It has been surprisingly found that embedding nanoparticles in a matrix comprising a mixture of alumina and zirconia is especially efficient to prevent nanoparticles degradation.

### SUMMARY

This disclosure thus relates to a composite particle comprising nanoparticles dispersed in a matrix wherein:
- the nanoparticles (1) are semi-conductive nanoparticles ; and
- the matrix is a metal oxide compound of formula

   AlₓZr_{y}M_{z}O (I)

   wherein M represents one or more metal elements selected from the group of Si, Ti, Hf, Ge, Sn or mixtures thereof;
   wherein x, y and z respectively represent the stoichiometric ratios of Aluminum, Zirconium, and other metal elements;
   x is in the range from 0 to 3/5;
   y is in the range from 1/20 to 1/2; and
   z is in the range from 0 to 2/5, with the proviso that when z is zero, then (3/2x+2y)=1.

In an embodiment, x is in the range from 1/20 to 8/15 and y is in the range from 1/10 to 37/80. In a preferred embodiment, x is in the range from 1/10 to 8/15 and y is in the range from 1/10 to 17/40

In an embodiment, the matrix further comprises a concentration ranging from 0.1at% to 15at% of metal elements selected from Si, Ti, Hf, Ge, Sn, or mixtures thereof.

In an embodiment, the loading charge of the nanoparticles in the composite particle is at least 1%, preferably at least 2.5%, more preferably at least 5%, said loading charge being the mass ratio between the mass of nanoparticles comprised in a composite particle and the mass of said composite particle.

In an embodiment, wherein more than 95 wt% of the nanoparticles in a composite particle are dispersed in the inner part of the composite particle, where the composite particle consists of an inner part surrounded by an external layer, said external layer covering the whole inner part; said external layer representing less than 10 wt% of the composite particle and said external layer having a thickness greater than or equal to 5 nm, preferably greater than or equal to 15 nm.

In an embodiment, nanoparticles are uniformly dispersed in the matrix.

In an embodiment, aluminum oxide and zirconium oxide represent more than 90 wt% of the matrix

In an embodiment, the nanoparticles are III-V semi-conductive nanoparticles, preferably phosphide quantum dots, preferably selected from the group of InP, Cd₃P₂, Zn₃P₂, AlP, GaP, TlP quantum dots. In another embodiment, the nanoparticles are ternary I-III-VI2 semi-conductive nanoparticles, preferably selected from the group of CuInS₂, CuInSe₂, AgInS₂, AgInSe₂ quantum dots. In another embodiment, the nanoparticles are II-VI semi-conductive nanoparticles, preferably selected from the group of CdSe, CdSeS, ZnSe, ZnSeS quantum dots. In another embodiment, the nanoparticles are selected from the group of CuInZnS, CuInZnSe. Mixtures of various semi-conductive nanoparticles may be embedded in composite particles.

In an embodiment, the nanoparticles are semi-conductive hetero structured nanoparticles having a core selected from InP, Cd₃P₂, Zn₃P₂, A1P, GaP, TlP, CuInS₂, CuInSe₂, AgInS₂, AgInSe₂, CdSe, CdSeS, ZnSe, ZnSeS, CuInZnS, CuInZnSe. Mixtures of various semi-conductive nanoparticles may be embedded in composite particles.

In an embodiment, the composite particles comprise nanoparticles selected from InP/ZnS, InP/ZnSe, InP/ZnSeₓS₍₁₋ₓ₎, InP/CdS/ZnS, InP/ZnSe/ZnS, InP/ZnSeₓS₍₁₋ₓ₎/ZnS, CuInS₂, CuInSe₂, AgInS₂, AgInSe₂, CdSe/CdS/ZnS, CdSeₓS₍₁₋ₓ₎/CdS/ZnS, CdSe/ZnSe/ZnS, CdSe/ZnSeₓS₍₁₋ₓ₎/ZnS, CdSeₓS₍₁₋ₓ₎/ZnSe/ZnS, CdₓZn₍₁₋ₓ₎Se/ZnSe/ZnS quantum dots or mixtures thereof. Mixtures of various semi-conductive nanoparticles may be embedded in composite particles.

This disclosure also relates to a method of preparation of a composite particle as disclosed hereabove, wherein the metal oxide matrix is obtained by hydrolysis of aluminium alkoxides, zirconium alkoxides and optionally other metal alkoxides.

This disclosure also relates to a light converting element comprising:
- a plurality of composite particles as disclosed hereabove, said composite particles comprising fluorescent nanoparticles; and
- a polymer matrix in which the plurality of composite particles is dispersed.

In an embodiment, the amount of composite particles in the polymer matrix is ranging from 0.05 wt% to 20 wt%, based on the weight of said light converting element.

This disclosure also relates to a display comprising a light converting element as disclosed hereabove.

This disclosure also relates to a light emitting diode comprising a light converting element as disclosed hereabove.

This disclosure also relates to the use of a light converting element as disclosed hereabove in a display, a light emitting diode or an organic light-emitting diode.

### DEFINITIONS

In the present invention, the following terms have the following meanings:

**"at%"** refers to the atomic percentage of an element in a compound. In this disclosure, the atomic percentage for a metallic element of a metal oxide matrix is given without considering oxygen. For instance, Al₂O₃ contains 100 at% of aluminum as no other metallic element is present in the metal oxide.

**"wt%"** refers to the weight percentage of a compound in a formulation or of an element in a compound.

**"Core/shell"** refers to heterogeneous nanostructure comprising an inner part: the core, overcoated on its surface, totally or partially, by a film or a layer of at least one atom thick material different from the core: the shell. Core/shell structures are noted as follows: core material/shell material. For instance, a particle comprising a core of CdSe and a shell of ZnS is noted CdSe/ZnS. By extension, core/shell/shell structures are defined as core/first-shell structures overcoated on their surface, totally or partially, by a film or a layer of at least one atom thick material different from the core and/or from the first shell: the second-shell. For instance, a particle comprising a core of CdSe, a first-shell of CdS and a second-shell of ZnS is noted CdSe/CdS/ZnS. Core/shell nanostructure also include nanoparticles in which the central part: the core, is embedded - or encapsulated - by a layer of material disposed on the core: the shell, said shell having a gradient of composition from the core to the outside of the shell. In this case, the composition of the nanoparticle is changing smoothly - for instance continuously - from the core composition - for instance CdSe - to the outside composition of the shell - ZnS for instance. There is no precise boundary between core and shell but properties in centre of the core are different from properties on the outer boundary of shell. In addition, core and shell may have different shapes, for instance a dot - a nanosphere or a nanocube or any other nanocluster - is provided as a core and shell is grown laterally around the core, yielding an heterostructure with shape of a nanoplate but comprising a dot inside the nanoplate.

**"Doped"** refers to a composition of material with a crystalline structure - core or shell - in which a dopant element is substituted to the main element. Such compositions are noted QD:Dopant in the following. For instance, a ZnSe quantum dot may be doped with Manganese (Mn) so that a part of Zn elements are substituted by Mn elements, and noted ZnSe:Mn.

**"Encapsulated"** refers to a state in which a material - or a matrix - coats, surrounds, embeds, contains, comprises, wraps, packs, or encloses a plurality of particles, which may be nanoparticles (1) or composite particles (2).

**"Fluorescent"** refers to the property of a material that emits light after being excited by absorption of light. Actually, light absorption drives said material in an energetically excited state, which eventually relaxes by emission of light of lower energy, *i.e.*, of longer wavelength - red shifted.

**"Loading charge"** refers to the mass ratio between the mass of particles comprised in a formulation and the mass of said formulation. For the sake of clarity, 10g of particles mixed with 90g of a matrix defines a loading charge of 10%.

**"Mean size"** refers to a size of a population of particles, obtained by a mathematical mean of sizes of each individual particle of the population. Practically, the mean size may be determined by electronic microscopy: size of each particle visible in the microscopy is evaluated by fitting each particle with a circle whose diameter defines the size of the particle, then computing the mean of all individual sizes to obtain the mean size. Other methods, such as light scattering may be used to determine indirectly the mean size of the population of particles. Experimentally, particles are always obtained in the form of population of particles. By extension in this disclosure, the mean size of a particle is the mean size of the population of particles which has been synthesized. For the sake of clarity, a particle having a mean size between 100 nm and 250 nm is a particle representative of a population of particles having a mean size between 100 nm and 250 nm.

**"Monodisperse"** refers to a population of particles, wherein the distribution of size populations has a PolyDispersity Index (PDI) lower than 0.3, preferably lower than 0.2.

**"Nanometric size"** refers to a size of matter where at least one physical property is directly governed by size. For semi-conductive nanoparticles, nanometric size has to be defined with the average Bohr radius of an electron/hole pair in the material in which quantum effects appear due to confinement. For semi-conductive materials disclosed here, quantum effects appear for size in at least one dimension of the object below 20 nm, preferably below 10 nm, more preferably below 5 nm. For conductive particles, nanometric size has to be defined from the resonance of oscillations of free electron gas density, which becomes relevant for optical measurements in the range from 380 nm to 3 µm for size in at least one dimension of the object below 20 nm for conductive materials disclosed here.

**"Nanoparticle"** refers to a particle having at least one dimension in the 0.1 to 100 nanometers range. Nanoparticles may have any shape. A nanoparticle may be a single particle or an aggregate of several single particles or a composite particle comprising single particles dispersed in a matrix. Single particles may be crystalline. Single particles may have a core/shell or plate/crown structure.

**"Nanoplate"** refers to a nanoparticle having a 2D-shape, *i.e.*, having one dimension smaller than the two others; said smaller dimension ranging from 0.1 to 100 nanometers. In the sense of the present invention, the smallest dimension (hereafter referred to as the thickness) is smaller than the other two dimensions (hereafter referred to as the length and the width) by a factor (aspect ratio) of at least 1.5.

"**PLQY**" refers to photoluminescence quantum yield, *i.e.*, the ratio between the number of fluorescence photons and the exciting photons

**"Range"** refers to a range of values. Lower limit and upper limit of the range are included in the range.

**"Semi-conductive nanoparticles"** refers to particles made of a material having an electronic structure corresponding to semi-conductive materials known in electronic industry but having a **nanometric size.** Due to their specific electronic structure, semi-conductive materials behave as high-pass absorbing materials. Indeed, light having a wavelength more energetic than band gap may be absorbed by the semi-conductive material, yielding an electron/hole pair, an exciton, which later recombine in the material and dissipate heat, or emit light, or both. On the contrary, light having a wavelength less energetic than band gap cannot be absorbed: semi-conductive material is transparent for these wavelengths. In macroscopic semi-conductive materials, visible light is generally absorbed while near/mid infra-red light is not absorbed. When semi-conductive particles have a **nanometric size,** confinement - *i.e., s*hape and nanometric size - governs electronic structure following the rules of quantum mechanics and light absorption may be limited to UV range or UV and high energy visible light.

### DETAILED DESCRIPTION

This disclosure relates to a composite particle (2) comprising nanoparticles (1) dispersed in a matrix. The nanoparticles (1) are semi-conductive nanoparticles. The matrix is a metal oxide compound comprising zirconium oxide and optionally aluminum oxide.

### Semi-conductive nanoparticles

In this disclosure, the semi-conductive nanoparticles can be any kind of semi-conductive material prepared in the form of nanoparticles (1).

Suitable semi-conductive nanoparticles may be selected from fluorescent semi-conductive nanoparticles known as quantum dots, which may have various composition, shape and structure.

### Quantum dots composition

In one embodiment, the quantum dots comprise a material of formula

MₓQ_{y}E_{z}A_{w} (II)

in which M is selected from the group consisting of Zn, Cd, Hg, Cu, Ag, Au, Ni, Pd, Pt, Co, Fe, Ru, Os, Mn, Tc, Re, Cr, Mo, W, V, Nd, Ta, Ti, Zr, Hf, Be, Mg, Ca, Sr, Ba, Al, Ga, In, Tl, Si, Ge, Sn, Pb, As, Sb, Bi, Sc, Y, La, Ce, Pr, Nd, Sm, Eu, Gd, Tb, Dy, Ho, Er, Tm, Yb, Cs or a mixture thereof; Q is selected from the group consisting of Zn, Cd, Hg, Cu, Ag, Au, Ni, Pd, Pt, Co, Fe, Ru, Os, Mn, Tc, Re, Cr, Mo, W, V, Nd, Ta, Ti, Zr, Hf, Be, Mg, Ca, Sr, Ba, Al, Ga, In, Tl, Si, Ge, Sn, Pb, As, Sb, Bi, Sc, Y, La, Ce, Pr, Nd, Sm, Eu, Gd, Tb, Dy, Ho, Er, Tm, Yb, Cs or a mixture thereof; E is selected from the group consisting of O, S, Se, Te, C, N, P, As, Sb, F, Cl, Br, I, or a mixture thereof; and A is selected from the group consisting of O, S, Se, Te, C, N, P, As, Sb, F, Cl, Br, I, or a mixture thereof. x, y, z and w are independently a decimal number from 0 to 5; x, y, z and w are not simultaneously equal to 0; x and y are not simultaneously equal to 0; z and w are not simultaneously equal to 0.

Especially, quantum dots may comprise a material of formula MₓE_{y}, in which M is Zn, Cd, Hg, Cu, Ag, Al, Ga, In, Si, Ge, Pb, Sb or a mixture thereof; and E is O, S, Se, Te, N, P, As or a mixture thereof. x and y are independently a decimal number from 0 to 5, with the proviso that x and y are not 0 at the same time.

In a specific embodiment, quantum dots comprise a material selected from the group consisting of CdS, CdSe, CdTe, ZnS, ZnSe, ZnTe, HgS, HgSe, HgTe, HgO, GeS, GeSe, GeTe, SnS, SnSe, SnTe, PbS, PbSe, PbTe, GeS₂, GeSe₂, SnS₂, SnSe₂, CuInS₂, CuInSe₂, CuInZnS, CuInZnSe, AgInS₂, AgInSe₂, CuS, Cu₂S, Ag₂S, Ag₂Se, Ag₂Te, FeS, FeS₂, InP, Cd₃P₂, Zn₃P₂, CdO, ZnO, FeO, Fe₂O₃, Fe₃O4, Al₂O₃, TiO₂, MgO, MgS, MgSe, MgTe, AlN, AlP, AlAs, AlSb, GaN, GaP, GaAs, GaSb, InN, InP, InAs, InSb, InAsP, TlN, TlP, TlAs, TISb, MoS₂, PdS, Pd4S, WS₂, CsPbCl₃, PbBr₃, CsPbBr₃, CH₃NH₃PbI₃, CH₃NH₃PbCl₃, CH₃NH₃PbBr₃, CsPbI₃, FAPbBr₃, FAPbI₃ (where FA stands for formamidinium), or a mixture thereof.

In one embodiment, quantum dots are doped with at least one transition metal such as, for example, Sc, Y, Ti, Zr, Hf, Rf, V, Nb, Ta, Dd, Cr, Mo, W, Sg, Mn, Tc, Re, Bh, Fe, Ru, Os, Hs, Co, Rh, Ir, Ni, Pd, Pt, Cu, Ag or Au. Preferably, quantum dots are doped with Mg, Mn, Al, Cu, Te or Ag. In particular, ZnSe quantum dots doped with Mn :ZnSe:Mn, ZnSe quantum dots doped with Al: ZnSe:Al, or ZnSe quantum dots doped with Mg: ZnSe:Mg are suitable. Amount of dopant is preferably less than 10wt%. Dopant amount of 5wt% or 2wt% are suitable.

### Quantum dots shape

In one embodiment, quantum dots may have different shapes, provided that they present a nanometric size leading to quantum confinement in the nanoparticle.

Quantum dots may have nanometric sizes in three dimensions, allowing quantum confinement in all three spatial dimensions. Such quantum dots are for instance nanocubes or nanospheres.

Quantum dots may have a nanometric sizes in two dimensions, the third dimension being larger: quantum confinement is in two spatial dimensions. Such quantum dots are for instance nanorods, nanowires or nanorings.

Quantum dots may have a nanometric size in one dimension, the other dimensions being larger: quantum confinement is in one spatial dimension only. Such quantum dots are for instance nanoplates, nanosheets, nanoribbons or nanodisks. Nanoplates are especially interesting in this disclosure because absorption cross section - *i.e.*, efficiency to capture a photon of incident light on the quantum dot - is ten times higher than a nanosphere having the same composition and structure emitting at the same wavelength. This higher cross section improves significantly sensitivity of assays. In addition, nanoplates have narrower FWHM emission spectra - typically below 40 nm - and shorter photoluminescence decay time - by one order of magnitude - as compared to spherical quantum dots.

The exact shape of quantum dots defines confinement properties; then electronic and optical properties.

### Quantum dots structure

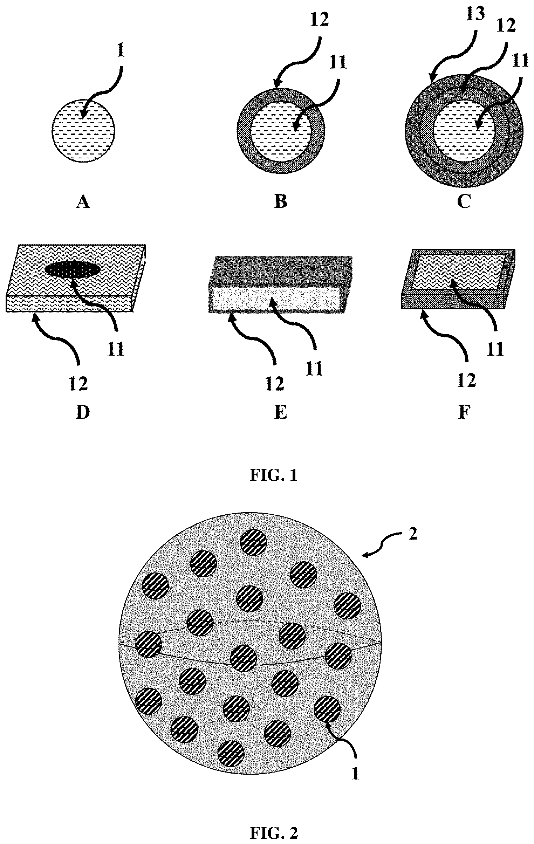

In an embodiment, quantum dots are homostructures. By homostructure, it is meant that the quantum dot is homogenous and has the same local composition in all its volume. A homogeneous spherical quantum dot is illustrated in figure 1A.

In an alternative embodiment, quantum dots are heterostructures. By heterostructure, it is meant that the quantum dot is comprised of several sub-volumes, each sub-volume having a different composition from neighbouring sub-volumes. In a particular embodiment, all sub-volumes have a composition defined by formula (II) disclosed above, with different parameters, *i.e.*, elemental composition and stoichiometry.

Example of heterostructure are core/shell nanoparticles, the core (11) having any shape disclosed above. A shell (12) is a layer covering totally or partially the core. A particular example of core/shell heterostructure is a multi-layered structure comprising a core (11) and several successive shells (12, 13). For convenience, these multi-layered heterostructures are named core/shell hereafter. Core (11) and shell (12,13) may have the same shape - sphere in sphere for example - or not - sphere in plate for instance. A core/shell spherical nanoparticle is illustrated in figure 1B. A core/shell/shell spherical nanoparticle is illustrated in figure 1C. A sphere in plate nanoparticle is illustrated in figure 1D - also named a dot in plate. A core/shell nanoplate is illustrated in figure 1E.

Another example of heterostructure are core/crown nanoparticles, the core having any shape disclosed above. A crown is a band of material disposed on the periphery of the core. This heterostructure is particularly useful with cores being nanoplates and crown disposed on the edges of the nanoplate. A core/crown nanoplate is illustrated in figure 1F.

These heterostructure may have a gradient of composition from the core to the outside of the shell so that there is no precise boundary between core and shell but properties in centre of the core are different from properties on the outer boundary of shell.

In a configuration, nanoparticles (1) are II-VI type semi-conductive nanoparticles and comprise a core based on cadmium, sulfur and selenium and are selected from:
- CdSe/CdS, CdSe/CdS/ZnS, CdSe/CdS/ZnSe, CdSe/CdS/ZnSe_{y}S_{(1-y)}, CdSe/ZnSe/ZnS, CdSe/ZnSeₓS₍₁₋ₓ₎/ZnS,
- CdSeₓS₍₁₋ₓ₎/ZnS, CdSeₓS₍₁₋ₓ₎/ZnSe, CdSeₓS₍₁₋ₓ₎/ZnSe_{y}S_{(1-y)}, CdSeₓTe₍₁₋ₓ₎/ZnS, CdSeₓTe₍₁₋ₓ₎/ZnSe,
- CdSe/Cd_{y}Zn_{(1-y)}S, CdSe/Cd_{y}Zn_{(1-y)}S/ZnS, CdSe/Cd_{y}Zn_{(1-y)}S/ZnSe, CdSe/Cd_{y}Zn_{(1-y)}S/ZnSe_{z}S_{(1-z)}
- CdSe/Cd_{y}Zn_{(1-y)}Se, CdSe/Cd_{y}Zn_{(1-y)}Se/ZnS, CdSe/Cd_{y}Zn_{(1-y)}Se/ZnSe, CdSe/Cd_{y}Zn_{(1-y)}Se/ZnSe_{z}S_{(1-z)},
- CdSeₓS₍₁₋ₓ₎/CdS, CdSeₓS₍₁₋ₓ₎/CdS/ZnS, CdSeₓS₍₁₋ₓ₎/CdS/ZnSe, CdSeₓS₍₁₋ₓ₎/CdS/ZnSe_{y}S_{(1-y)},
- CdSeₓS₍₁₋ₓ₎/Cd_{y}Zn_{(1-y)}S, CdSeₓS₍₁₋ₓ₎/Cd_{y}Zn_{(1-y)}S/ZnS, CdSeₓS₍₁₋ₓ₎/Cd_{y}Zn_{(1-y)}S/ZnSe, CdSeₓS₍₁₋ₓ₎/Cd_{y}Zn_{(1-y)}S/ZnSe_{z}S_{(1-z)},
- CdSeₓS₍₁₋ₓ₎/Cd_{y}Zn_{(1-y)}Se, CdSeₓS₍₁₋ₓ₎/Cd_{y}Zn_{(1-y)}Se/ZnS, CdSeₓS₍₁₋ₓ₎/Cd_{y}Zn_{(1-y)}Se/ZnSe, CdSeₓS₍₁₋ₓ₎/Cd_{y}Zn_{(1-y)}Se/ZnSe_{z}S_{(1-z)},
where x, y and z are rational numbers between 0 (excluded) and 1 (excluded), and emit light by fluorescence. Emitted light is typically a band centered on a wavelength in the visible range from 380 nm to 780 nm. Emitted light is typically a band having a FWHM less than 50 nm, preferably less than 30 nm, more preferably less than 20 nm.

In a configuration, nanoparticles (1) are II-VI type semi-conductive nanoparticles and comprise a core based on zinc, sulfur and selenium and are selected from:
- ZnSe/ZnS, ZnSe/ZnSe_{y}S_{(1-y)}, ZnTe/ZnSe_{y}S_{(1-y)}
- ZnSeₓS₍₁₋ₓ₎/ZnS, ZnSeₓS₍₁₋ₓ₎/ZnSe, ZnSeₓS₍₁₋ₓ₎/ZnSe_{y}S_{(1-y)}, ZnSeₓTe₍₁₋ₓ₎/ZnS, ZnSeₓTe₍₁₋ₓ₎/ZnSe, ZnSeₓTe₍₁₋ₓ₎/ZnSeₓS₍₁₋ₓ₎,
- ZnSe/Cd_{y}Zn_{(1-y)}S, ZnSe/Cd_{y}Zn_{(1-y)}S/ZnS, ZnSe/Cd_{y}Zn_{(1-y)}S/ZnSe, ZnSe/Cd_{y}Zn_{(1-y)}S/ZnSe_{z}S_{(1-z)}
- ZnSe/Cd_{y}Zn_{(1-y)}Se, ZnSe/Cd_{y}Zn_{(1-y)}Se/ZnS, ZnSe/Cd_{y}Zn_{(1-y)}Se/ZnSe, ZnSe/Cd_{y}Zn_{(1-y)}Se/ZnSe_{z}S_{(1-z)},
- ZnSeₓS₍₁₋ₓ₎/ZnS, ZnSeₓS₍₁₋ₓ₎/ZnS/ZnSe, ZnSeₓS₍₁₋ₓ₎/ZnS/ZnSe_{y}S_{(1-y)},
- ZnSeₓS₍₁₋ₓ₎/Cd_{y}Zn_{(1-y)}S, ZnSeₓS₍₁₋ₓ₎/Cd_{y}Zn_{(1-y)}S/ZnS, ZnSeₓS₍₁₋ₓ₎/Cd_{y}Zn_{(1-y)}S/ZnSe, ZnSeₓS₍₁₋ₓ₎/Cd_{y}Zn_{(1-y)}S/ZnSe_{z}S_{(1-z)},
- ZnSeₓS₍₁₋ₓ₎/Cd_{y}Zn_{(1-y)}Se, ZnSeₓS₍₁₋ₓ₎/Cd_{y}Zn_{(1-y)}Se/ZnS, ZnSeₓS₍₁₋ₓ₎/Cd_{y}Zn_{(1-y)}Se/ZnSe, ZnSeₓS₍₁₋ₓ₎/Cd_{y}Zn_{(1-y)}Se/ZnSe_{z}S_{(1-z)},
where x, y and z are rational numbers between 0 (excluded) and 1 (excluded), and emit light by fluorescence. Emitted light is typically a band centered on a wavelength in the visible range from 380 nm to 780 nm. Emitted light is typically a band having a FWHM less than 50 nm, preferably less than 30 nm, more preferably less than 20 nm.

In a configuration, nanoparticles (1) are II-VI type semi-conductive nanoparticles and comprise a core based on zinc, cadmium, sulfur and selenium and are selected from:
- Cd_{w}Zn_{(1-w)}Se/CdS, Cd_{w}Zn_{(1-w)}Se/CdS/ZnS, Cd_{w}Zn_{(1-w)}Se/ZnSe/ZnS, Cd_{w}Zn_{(1-w)}Se/CdS/ZnSe, Cd_{w}Zn_{(1-w)}Se/CdS/ZnSe_{y}S_{(1-y)},
- Cd_{w}Zn_{(1-w)}SeₓS₍₁₋ₓ₎/ZnS, Cd_{w}Zn_{(1-w)}SeₓS₍₁₋ₓ₎/ZnSe, Cd_{w}Zn_{(1-w)}SeₓS₍₁₋ₓ₎/ZnSe_{y}S_{(1-y)}, Cd_{w}Zn_{(1-w)}SeₓTe₍₁₋ₓ₎/ZnS, Cd_{w}Zn_{(1-w)}SeₓTe₍₁₋ₓ₎/ZnSe,
- Cd_{w}Zn_{(1-w)}Se/Cd_{y}Zn_{(1-y)}S, Cd_{w}Zn_{(1-w)}Se/Cd_{y}Zn_{(1-y)}S/ZnS, Cd_{w}Zn_{(1-w)}Se/Cd_{y}Zn_{(1-y)}S/ZnSe, Cd_{w}Zn_{(1-w)}Se/Cd_{y}Zn_{(1-y)}S/ZnSe_{z}S_{(1-z)}
- Cd_{w}Zn_{(1-w)}Se/Cd_{y}Zn_{(1-y)}Se, Cd_{w}Zn_{(1-w)}Se/Cd_{y}Zn_{(1-y)}Se/ZnS, Cd_{w}Zn_{(1-w)}Se/Cd_{y}Zn_{(1-y)}Se/ZnSe, Cd_{w}Zn_{(1-w)}Se/Cd_{y}Zn_{(1-y)}Se/ZnSe_{z}S_{(1-z)},
- Cd_{w}Zn_{(1-w)}SeₓS₍₁₋ₓ₎/CdS, Cd_{w}Zn_{(1-w)}SeₓS₍₁₋ₓ₎/CdS/ZnS, Cd_{w}Zn_{(1-w)}SeₓS₍₁₋ₓ₎/CdS/ZnSe, Cd_{w}Zn_{(1-w)}SeₓS₍₁₋ₓ₎/CdS/ZnSe_{y}S_{(1-y)},
- Cd_{w}Zn_{(1-w)}SeₓS₍₁₋ₓ₎/Cd_{y}Zn_{(1-y)}S, Cd_{w}Zn_{(1-w)}SeₓS₍₁₋ₓ₎/Cd_{y}Zn_{(1-y)}S/ZnS, Cd_{w}Zn_{(1-w)}SeₓS₍₁₋ₓ₎/Cd_{y}Zn_{(1-y)}S/ZnSe, Cd_{w}Zn_{(1-w)}SeₓS₍₁₋ₓ₎/Cd_{y}Zn_{(1-y)}S/ZnSe_{z}S_{(1-z)},
- Cd_{w}Zn_{(1-w)}SeₓS₍₁₋ₓ₎/Cd_{y}Zn_{(1-y)}Se, Cd_{w}Zn_{(1-w)}SeₓS₍₁₋ₓ₎/Cd_{y}Zn_{(1-y)}Se/ZnS, Cd_{w}Zn_{(1-w)}SeₓS₍₁₋ₓ₎/Cd_{y}Zn_{(1-y)}Se/ZnSe, Cd_{w}Zn_{(1-w)}SeₓS₍₁₋ₓ₎/Cd_{y}Zn_{(1-y)}Se/ZnSe_{z}S_{(1-z)},
where w, x, y and z are rational numbers between 0 (excluded) and 1 (excluded), and emit light by fluorescence. Emitted light is typically a band centered on a wavelength in the visible range from 380 nm to 780 nm. Emitted light is typically a band having a FWHM less than 50 nm, preferably less than 30 nm, more preferably less than 20 nm.

Most preferred II-VI nanoparticles (1) are CdSe/CdS/ZnS, CdSeₓS₍₁₋ₓ₎/CdS/ZnS, CdSe/ZnSe/ZnS, CdSe/ZnSeₓS₍₁₋ₓ₎/ZnS, CdSeₓS₍₁₋ₓ₎/ZnSe/ZnS, CdₓZn₍₁₋ₓ₎Se/ZnSe/ZnS.

Other particularly suitable nanoparticles (1) are III-V type semi-conductive nanoparticles and are selected from InP/ZnS, InP/ZnSe, InP/ZnSeₓS₍₁₋ₓ₎, InP/CdS/ZnS, InP/ZnSe/ZnS, InP/ZnSeₓS₍₁₋ₓ₎/ZnS, InP/GaP, CuₓIn_{y}Zn_{(1-x-y)}S/ZnS, InₓAs₍₁₋ₓ₎P/ZnSeₓS₍₁₋ₓ₎, CsPbBr₃, CsPbI₃, FAPbI₃, where FA stands for formamidinium and x and y are rational numbers between 0 (excluded) and 1 (excluded).

Other particularly suitable nanoparticles (1) are I-III-VI₂ type semi-conductive nanoparticles and are selected from AgInS₂, AgInSe₂, CuₓIn₍₁₋ₓ₎S₂, CuₓIn₍₁₋ₓ₎Se₂, especially CuInS₂ and CuInSe₂.

Other particularly suitable nanoparticles (1) are selected from doped quantum dots as core, such as ZnSe:Mn/ZnS, or ZnSe:Cu/ZnS.

Other particularly suitable nanoplates are selected from ZnTe/ZnSe_{y}S_{(1-y)}, ZnSeₓTe₍₁₋ₓ₎/ZnS, ZnSeₓTe₍₁₋ₓ₎/ZnSe, ZnSeₓTe₍₁₋ₓ₎/ZnSe_{y}S_{(1-y)}, where x and y are rational numbers between 0 (excluded) and 1 (excluded).

### Matrix

In this disclosure, the matrix is a metal oxide compound comprising at least aluminum and zirconium as metallic elements, and having the formula (I):

AlₓZr_{y}M_{z}O (I)

In formula (I), M represents one or more metal elements selected from the group of Si, Ti, Hf, Ge, Sn, or mixtures thereof. Doping the matrix with titanium improves the electric conduction of the matrix - intrinsically isolating - and allows to hinder electric charge accumulation following optical excitation of quantum-dot - which yields a pair of charges in the dots. Concentration of titanium for doping is preferably less than 10 at%, where the atomic percentage is given for metallic elements only. Doping the matrix with hafnium allows to increase the density of the matrix and/or adjust the refractive index of the matrix. These properties are advantageous in order to lower the refractive index difference between the matrix and the nanoparticles (1). Doping the matrix with silicon leads to lower permeability to water, thereby increasing the protection efficiency of the matrix against degradation of nanoparticles (1) in humid conditions.

In formula (I), the stoichiometric coefficient of oxygen is fixed to 1. Therefore, parameters x, y and z are linked, depending on the respective coordination numbers of Al, Zr and M elements in the metal oxide matrix.

In addition, x is in the range from 0 to 3/5; y is in the range from 1/20 to 1/2; and z is in the range from 0 to 2/5. When z is null, then the relation between x and y is (3/2x+2y)=1, so as to respect coordination numbers of alumina and zirconia.

In a preferred embodiment, x is in the range from 1/40 to 8/15; y is in the range from 1/10 to 77/160. More preferably x is in the range from 1/20 to 8/15; y is in the range from 1/10 to 37/80. Even more preferably, x is in the range from 1/10 to 8/15; y is in the range from 1/10 to 17/40. The following table I shows the equivalence between values of x and y - z being null - in terms of atomic percentage of Aluminum and Zirconium.

**Table I**

| Al-x | Zr-y | 1,5x+2y | Al at% | Zr at% |
|---|---|---|---|---|
| 0 | 1/2=0.5 | 1 | 0,0% | 100,0% |
| 1/80=0.0125 | 157/320=0.490625 | 1 | 2,5% | 97,5% |
| 1/40=0.025 | 77/60=0.48125 | 1 | 4,9% | 95,1% |
| 1/20=0.05 | 37/80=0.4625 | 1 | 9,8% | 90,2% |
| 1/10=0.1 | 17/40=0.425 | 1 | 19,0% | 81,0% |
| 8/15 | 1/10=0.01 | 1 | 84,2% | 15,8% |
| 3/5=0.6 | 1/20=0.05 | 1 | 92,3% | 7,7% |

For instance, the metal oxide matrix corresponding to x=2/9, y=1/3 and z=0 is Al_{2/9}Zr_{1/3}O, comprising 40 at% of aluminium and 60 at% of zirconium, where the atomic percentage is given for metallic elements only.

Similarly, the metal oxide matrix corresponding to x=8/15, y=1/10 and z=0 is Al_{1/15}Zr_{1/10}O, comprising 84 at% of aluminium and 16 at% of zirconium, where the atomic percentage is given for metallic elements only.

Similarly, the metal oxide matrix corresponding to x=6/17, y=4/17 and z=0 is Al_{6/17}Zr_{4/17}O, comprising 60 at% of aluminium and 40 at% of zirconium, where the atomic percentage is given for metallic elements only. Compositions of metal oxide matrix with x=6/17±0.03 and y=4/17±0.03 are especially efficient to protect nanoparticles (1).

Similarly, the metal oxide matrix corresponding to x=2/5, y=1/5 and z=0 is Al_{2/5}Zr_{1/5}O, comprising 66,7 at% of aluminium and 33.3 at% of zirconium, where the atomic percentage is given for metallic elements only. Compositions of metal oxide matrix with x=2/5±0.03 and y=1/5±0.03 are especially efficient to protect nanoparticles (1).

Similarly, a metal oxide matrix corresponding to x=1/10 and y=1/10 may have a value for z varying from z=13/40 if all elements represented by M have a coordination number of 2 - MO₂ - to z=13/30 if and z=0 all elements represented by M have a coordination number of 1.5 - M₂O₃.

In a preferred embodiment, x is in the range from 2/9 to 6/17.

In a preferred embodiment, y is in the range from 4/17 to 1/3.

In an embodiment, aluminum oxide and zirconium oxide represent more than 90 wt% of the matrix, preferably more than 95 wt% of the matrix.

In an embodiment, the matrix further comprises a concentration ranging from 0.1 at% to 15 at% of metal elements selected from silicon (Si), titanium (Ti), hafnium (Hf), germanium (Ge), or tin (Sn) where the atomic percentage is given for metallic elements only.

### Composite particles

In this disclosure, composite particles (2) are encapsulated in a metal oxide matrix so as to form composite particles (1).

In an embodiment, the loading charge of the nanoparticles (1) in the composite particle (2) is at least 1%, preferably at least 2.5%, more preferably at least 5%, said loading charge being the mass ratio between the mass of nanoparticles (1) comprised in a composite particle (2) and the mass of said composite particle (2). Indeed, the performance of composite particles (2) is proportional to the concentration of nanoparticles (1) they contain. Therefore, a high concentration of nanoparticles (1) is advantageous. It has to be noted however that increasing concentration of nanoparticles (1) without degrading their properties - as a consequence of aggregation or manufacturing process for instance - is not easy.

More precisely, for nanoparticles (1) emitting green fluorescent light - between 510 nm and 580 nm - when irradiated with blue light with a wavelength of 450 nm, the loading charge is preferably at least 2.5%, more preferably at least 5%, optionally at least 10%. For nanoparticles (1) emitting red fluorescent light - between 600 nm and 680 nm - when irradiated with blue light with a wavelength of 450 nm, the loading charge is preferably at least 1%, more preferably at least 2%, optionally at least 5%.

In some embodiments, the loading charge of the nanoparticles (1) in the composite particle (2) is even lower than 1%. This is especially desirable with nanoparticles (1) having a strong absorption and PLQY: a low concentration of nanoparticles (1) is sufficient to achieve the light conversion expected. A loading charge of the nanoparticles (1) in the composite particle (2) in the range from 0.1% to 1% may be preferred. This is especially relevant for red fluorescent nanoparticles (1).

In addition, the geometrical distribution of nanoparticles (1) in composite particles (1) may be controlled in several ways.

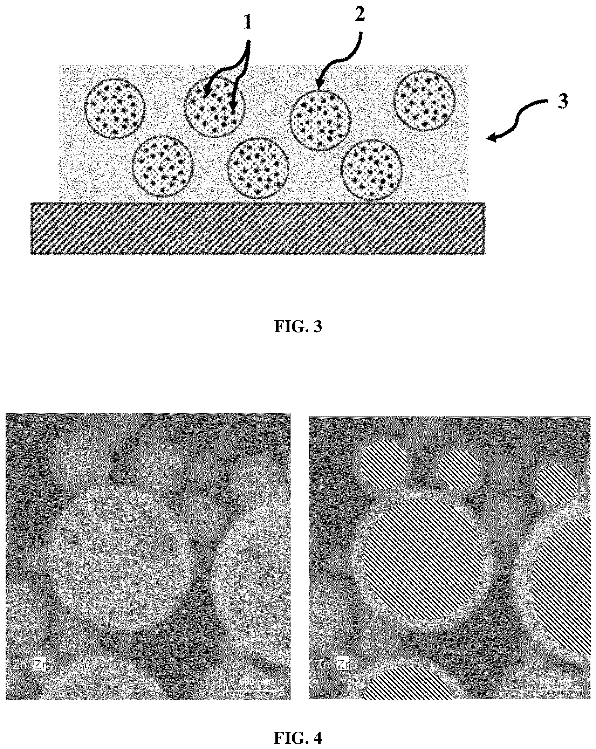

In an embodiment, more than 95 wt% of the nanoparticles (1) in a composite particle (2) are dispersed in the inner part of the composite particle (2). By inner part, it is meant the following: the composite particle (2) consists of an inner part surrounded by an external layer. The external layer covers the whole inner part. The external layer represents less than 10 wt% of the composite particle (2). And the external layer has a thickness greater than or equal to 5 nm. In a preferred embodiment, the thickness of the external layer is greater than or equal to 15 nm. This distribution of nanoparticles (1) in composite particles (2) is illustrated in **figure 4**. It appears clearly on this photograph that an external layer is devoid of nanoparticles (1). Then, nanoparticles are protected from the external environment by at least this external layer, whose properties are governed by the alumina and zirconia composition of the matrix.

In an embodiment, the nanoparticles (1) are uniformly dispersed in the matrix. By uniformly, it is meant that nanoparticles (1) are not aggregated, are not in contact, and are separated by metal oxide matrix. Each nanoparticle (1) is spaced from adjacent nanoparticles (1) by an average minimal distance.

In an embodiment, more than 95 wt% of the nanoparticles (1) in a composite particle (2) are uniformly dispersed in the inner part of the composite particle (2).

In an embodiment, at least two different type of nanoparticles (1) are dispersed in the matrix. For instance, a first type of nanoparticles (1) emitting green light by fluorescence and a second type of nanoparticles (1) emitting red light by fluorescence are mixed in the same composite particles. Such composite particles (2) comprising at least two different type of nanoparticles (1) are especially suitable for light converting elements (3): when illuminated with a single excitation light - typically blue light with a wavelength around 450 nm - green and red light may be emitted simultaneously with the non-absorbed blue light, leading to a homogeneous white light. In a preferred embodiment, the ratio of weight concentration of green fluorescent nanoparticles (1) divided by weight concentration of red fluorescent nanoparticles (1) is in the range from 25 to 4, preferably in the range from 20 to 5. For clarity, a ratio of weight concentration of green fluorescent nanoparticles (1) divided by weight concentration of red fluorescent nanoparticles (1) equal to ten correspond to composite particles (2) comprising ten times more - in weight - green fluorescent nanoparticles (1) than red fluorescent nanoparticles (1).

In an embodiment, the composite particles (2) present a low specific surface area - comprising two contributions of surface roughness and internal porosity - which can be characterized by adsorption-desorption of nitrogen in the Brunauer-Emmett-Teller (BET) theory. The low specific surface area is associated to a difficult penetration of oxygen or water through the matrix. Indeed, the matrix present high barrier properties to protect the nanoparticles from degradation. Low BET values, lower than 15 m²/g at a nitrogen pressure of 650 mmHg, preferably lower than 5 m²/g at a nitrogen pressure of 650 mmHg are preferred. However, the composite particles (2) may present a higher BET value, up to 50 m²/g and be still highly protective against oxygen or water degradation. Without being bound by theory, it seems that the matrix may have a large macroscopic porosity, but a very dense matrix around the nanoparticles (1), leading to a large BET value. In addition, the external layer devoid of nanoparticles (1) may be porous without affecting the overall barrier properties of the matrix.

The composite particles (2) may be in the form of a monodisperse population. Monodisperse composite particles (2) are advantageous for various reasons, depending on the domain of application. When composite particles (2) are used in fluid process, such as lateral flow assays in medical diagnostic, a homogeneous size distribution leads to more reproductible results. When composite particles (2) are used in optical elements - filters or sources, including conversion sources - a homogeneous size distribution avoids uncontrolled light diffusion and ensures spatial homogeneity of the optical element. It also prevents the transfer of charges created after absorption of a photon from one nanoparticle (1) to another nanoparticle (1), leading optionally to elimination of charge without fluorescence light, a phenomenon known as inter nanoparticle quenching.

The mean size of the composite particles (2) is preferably in a range from 50 nm to 50 µm, more preferably from 100 nm to 10 µm. Composite particles (2) having a mean size from 50 nm to 250 nm are especially suitable for micro-LED and Q-LED applications, in which light source is pixelated with squared pixels having sides as small as 3 µm - for virtual reality displays for instance - or in a range from 5 µm to 20 µm - for head-up display, automobile display or wearable display. Composite particles (2) having a size one order of magnitude smaller than pixels ensures an adequate distribution of composite particles (2) in the pixels, leading to homogeneity of light emission for all pixels. Composite particles (2) having a mean size from 250 nm to 500 nm are especially suitable for mini-LED and QD enhancement film applications. Composite particles (2) having a mean size from 500 nm to 2000 nm are especially suitable for assays, where the size of one composite particle (2) governs the light intensity available - by fluorescence when fluorescent nanoparticles (1) are used - for identification of a positive association between a target analyte and said composite particle (2). Composite particles (2) having a mean size greater than 500 nm are especially suitable for application in polymer films.

The composite particles (2) may be chemically modified on their surface. Chemical modification may be obtained by grafting, by adsorption of molecules or by physical processes - heat, vacuum or gaseous treatment. Chemical modification may use biological molecules intended for specific interactions with targets. Chemical modification may use compatibilization agents, allowing to mix composite particles (2) in complex formulations - such as resins, varnishes, paints, colloidal dispersion... - without aggregation or phase separation of the composite particles (2).

All the technically acceptable combinations AᵢBⱼ of the following structures - as nanoparticles (1) as such, or as heterostructured nanoparticles (1) comprising said structure as a core - and matrix yield suitable composite particles (2):
A. Nanoparticles (1):
   A1. Phosphide III-V quantum dots selected from the group of InP, Cd₃P₂, Zn₃P₂, AlP, GaP, TlP;
   A2. II-VI quantum dots selected from the group of CdSe, CdSeS, ZnSe, ZnSeS;
   A3. ternary I-III-VI₂ quantum dots selected from the group of CuInS₂, CuInSe₂, AgInS₂, AgInSe₂;
   A4. quantum dots selected from the group of CuInZnS, CuInZnSe.
B. Matrix:
   B1. Matrix of formula AlₓZr_{y}O with x in the range from 2/9 to 6/17 and y in the range from 4/17 to 1/3. Matrix composed solely of alumina and zirconia are especially dense, thereby limiting gas or harmful chemicals diffusion into the composite particles (2).
   B2. Matrix of formula AlₓZr_{y}M_{z}O with M representing silicon element; x in the range from 1/20 to 8/15; y in the range from 1/10 to 37/80; and z in the range from 1/100 to 1/20. Addition of silicon in the matrix leads to lower permeability to water.
   B3. Matrix of formula AlₓZr_{y}M_{z}O with M representing titanium element; x in the range from 1/20 to 8/15; y in the range from 1/10 to 37/80; and z in the range from 1/100 to 1/20. Addition of titanium allows to prevent electric charge accumulation following optical excitation of quantum-dot.
   B4. Matrix of formula AlₓZr_{y}M_{z}O with M representing hafnium element; x in the range from 1/20 to 8/15; y in the range from 1/10 to 37/80; and z in the range from 1/100 to 1/20. Addition of hafnium allows to increase the density of the matrix and/or adjust the refractive index of the matrix.

### Method of preparation

The invention also relates to a method of preparation of a composite particle (2) as disclosed hereabove, wherein the metal oxide matrix is obtained by hydrolysis of aluminium alkoxides, zirconium alkoxides and optionally other metal alkoxides.

The composite particles (2) may be obtained by the method disclosed in WO2018/220165, the full content of which is included by reference, in which the precursors of the metal oxide matrix are aluminium alkoxides, zirconium alkoxides and optionally other metal alkoxides.

Metal alkoxides are largely available compounds, with good compatibility between them, allowing to prepare mixture of alkoxides leading by condensation - in acidic or basic conditions - to metal oxide having a mixed composition, as disclosed hereabove. The molar ratio of metal alkoxides defines the atomic percentage of metal in the metal oxide obtained after condensation.

Preferred aluminum alkoxides are aluminum tert-butoxyde.

Preferred zirconium alkoxides are zirconium tetra propoxide Zr(OC₃H₇)₄, for instance as a solution in 1-propanol.

Preferred silicon alkoxides are tetramethoxysilane Si(OCH₃)₄ (commonly called methyl silicate) and tetraethoxysilane Si(OC₂Hₛ)₄ (commonly called ethyl silicate) or methyltriethoxysilane.

Preferred titanium alkoxides are titanium tetraisopropoxide Ti(OisoC₃H₇)₄., titanium tetraethoxide or titanium tetrabutoxide.

Preferred hafnium alkoxides are hafnium methoxide, hafnium n-propoxide, hafnium isopropoxide, and/or hafnium ethoxide

### Optical elements

This disclosure also relates to a light converting element (3) comprising a plurality of composite particles (2) as disclosed in any embodiment hereabove, with the proviso that composite particles (2) comprises fluorescent nanoparticles (1); and a polymer matrix (31) in which the plurality of composite particles (2) is dispersed.

Light converting element (3) are used in association with a light source, usually a blue light source. The nanoparticles (1) absorb light from the source and emit light of lower energy - *i.e.*, red shifted - by fluorescence. Finally, light emitted by the light source is converted into a light of another - greater - wavelength.

The polymer matrix may be any material known from the skilled artisan, and include especially polystyrene-based matrix, polymethylmethacrylate based matrix, silicone-based matrix or sol-gel based matrix.

The amount of composite particles (2) in the polymer matrix (31) is preferably ranging from 0.05 wt% to 20 wt%, based on the weight of said light converting element (3). Less than 0.05 wt% of composite particles (2) in the polymer matrix (31) leads to a low yield of light conversion and is not acceptable for light converting elements (3). Therefore, a high weight concentration is preferred. However, inclusion of more than 20wt% of composite particles (2) in the polymer matrix (31) usually lead to aggregation or phase separation of composite particles (2), finally leading to lowering of light conversion yield and light emission uniformity. A more preferred amount of composite particles (2) in the polymer matrix (31) is ranging from 0.1 wt% to 10 wt%.If the light converting element (3) is intended to absorb partially the blue light from source, then the amount of composite particles (2) in the polymer matrix (31) is preferably ranging from 0.05 wt% to 3 wt%: a lower concentration of composite particles lowers the overall absorption of the light converting element (3).

The amount of nanoparticles (1) in the polymer matrix (31) is preferably ranging from 100 ppm to 5000 ppm, based on the weight of said light converting element (3)

In an embodiment, at least two different type of composite particles (2) are dispersed in the matrix. For instance, a first type of composite particles (2) comprising nanoparticles (1) emitting green light by fluorescence and a second type of composite particles (2) comprising nanoparticles (1) emitting red light by fluorescence are mixed in the matrix. This embodiment is especially suitable for light converting elements (3): when illuminated with a single excitation light - typically blue light with a wavelength around 450 nm - green and red light may be emitted simultaneously with the non-absorbed blue light, leading to a homogeneous white light. In a preferred embodiment, the ratio of weight concentration of green fluorescent nanoparticles (1) divided by weight concentration of red fluorescent nanoparticles (1) is in the range from 25 to 4, preferably in the range from 20 to 5. For clarity, a ratio of weight concentration of green fluorescent nanoparticles (1) divided by weight concentration of red fluorescent nanoparticles (1) equal to ten correspond to composite particles (2) comprising ten times more - in weight - green fluorescent nanoparticles (1) than red fluorescent nanoparticles (1)

The polymer matrix may further comprise diffusing objects, such as oxide nanoparticles. These diffusing objects tend to increase the optical path of photons going through the light converting element (3), thereby increasing the probability of absorption of photons be semi-conductive nanoparticles (1) and leading to improved light conversion. The amount of diffusing objects in the polymer matrix (31) is preferably ranging from 0.1 wt% to 5 wt%, based on the weight of said light converting element (3), more preferably from 0.5 wt% to 2.5 wt%. In addition, an increase of diffusion by the polymer matrix leads to an increased haze of the light converting element (3) which is desirable for a light source.

The light converting element (3) may have the form of a film - suitable to be laid on a light source - or a solid piece having optionally additional optical properties, for instance if the solid piece is shaped as an optical lens - thereby providing focusing effect of fluorescent light - or as a pattern designed to distribute spatially fluorescent light - in a pixelated structure for instance.

The light converting element (3) may be included in a display, a LED - light emitting diode -, a mini-LED, a micro-LED or an OLED.

This disclosure therefore relates also to a display comprising a light converting element (3) as disclosed in any embodiment hereabove. By display, it is meant an apparatus or a device that displays an image signal. Display devices or display apparatus include all devices that display an image, a succession of pictures or a video such as, without limitation, a LCD display, a television, a projector, a computer monitor, a personal digital assistant, a mobile phone, a laptop computer, a tablet PC, an MP3 player, a CD player, a DVD player, a Blu-Ray player, a head mounted display, glasses, a helmet, a headgear, a headwear a smart watch, a watch phone or a smart device.

This disclosure therefore relates also to a light emitting diode - LED -, mini-LED or micro-LED comprising a light converting element (3) as disclosed in any embodiment hereabove.

Last, this disclosure relates to the use of a light converting element (3) in a display - especially under the form of a film - or a light emitting diode - especially under the form of a film or a solid piece.

### BRIEF DESCRIPTION OF THE DRAWINGS

**Figure 1A-1F** illustrates various nanoparticles (1) with homostructure (A) or heterostructures: spherical core/shell (B), spherical core/shell/shell (C), dot in plate (D), nanoplate core/shell (E) and nanoplate core/crown (F).
**Figure 2** illustrates a composite particle (2) comprising a plurality of spherical nanoparticles (1) encapsulated in a metal oxide matrix.
**Figure 3** illustrates an optical element (3) comprising composite particle (2) in a polymer matrix.
**Figure 4** presents an electron microscopy image of composite particle (2) comprising zinc-based nanoparticles (1) in a zirconium rich matrix. Identification of zinc and zirconium elements within the composite particles is achieved by Energy Dispersive X-ray (EDX) analysis. Figure on left is the raw image: the centers of the composite particles (2) appear slightly different than the periphery, because of EDX signal associated to zinc. Figure on right highlights the location of zinc signal in hatched areas for some nanoparticles (1). One can observe that an external layer devoid of zinc element is formed, with a thickness estimated around 50 nm.

### EXAMPLES

The present invention is further illustrated by the following examples.

### Protocol 1: Optical properties assessment.

The protection of optical properties of nanoparticles dispersed in a matrix is evaluated according to the following protocol:

Nanoparticles are first evaluated to determine their photoluminescence quantum yield - PLQY. 50 µg of nanoparticles dispersed in 3 mL of heptane are illuminated with a light source at 450 nm with a power of 10 µW/cm². The fluorescent light is measured, allowing to determine PLQY.

Nanoparticles are then processed in a metal oxide matrix and PLQY of composite particles is measured: it is observed that embedding the nanoparticles do not reduce PLQY. Further, absorption of composite particles is measured: blue light at 450 nm wavelength is irradiated on the sample with a controlled power and the following light values are measured: power of blue light transmitted through the sample - non absorbed light - power of fluorescent light - optionally measured for different ranges of wavelength, typically for a range of wavelength corresponding to green and a range of wavelength corresponding to red. This measurement is not an absolute determination of PLQY, but gives a quantitative estimate of fluorescence efficiency. For easier handling, composite particle may be embedded in a polymethylmethacrylate polymer for optical measures.

Composite particles are then stored in a cabinet for accelerated ageing, with controlled temperature of 50°C and 90% relative humidity, under constant illumination of 6 mW/cm of 450 nm wavelength blue light - hereafter AccTEST1. Alternative ageing test may be run: controlled temperature of 22°C and 50% relative humidity, under constant illumination of 1500 mW/cm of 450 nm wavelength blue light - hereafter AccTEST2 -; controlled temperature of 85°C and 50% relative humidity, without illumination - hereafter AccTEST -dark 1 -; controlled temperature of 60°C and 90% relative humidity, without illumination - hereafter AccTEST-dark2. An ageing test under natural light may be also run: constant illumination corresponding to D65 illuminant, with 500W/m² total power during 8 hours, 16 hours, 24 hours or 48 hours - hereafter AccTEST-white8/16/24/48. Such an illuminant may be obtained with various sources (Xenon lamp, Artificial daylight fluorescent lamp combining visible and UV outputs, Metal-halide lamps) in association with filters such as PIN 56077769 from Atlas Material Testing Technology GmbH. During accelerated ageing test, the power of fluorescent light is measured - continuously or periodically - and the time of ageing required to observe a decrease of 10% is determined - noted T90. In other words, at the beginning of the accelerated ageing test fluorescent light is set at 100% and when the power of fluorescent light reaches 90%, the time T90 is determined. Similarly, the time T85 corresponding to a decrease of 15% of fluorescent light may be determined.

With composite particles according to the invention, T90 is generally greater than 2500 hours with AccTEST1 conditions.

### Protocol 2: TEM observations.

The distribution of nanoparticles inside composite particles is measured as follows.

Composite particles are laid on a grid for transmission electron microscopy - STEM Jeol JSM-7800F. The same sample is further observed by Energy Dispersive X-Ray Analysis - EDX - to localize inside the composite particles where metallic elements are present. EDX pictures shows the distribution of nanoparticles inside the matrix comprising a majority of aluminum and zirconium.

### Example 1: CdSe quantum dots in a metal oxide matrix comprising only aluminum and zirconium metal elements.

CdSe nanoparticles were prepared according to methods of the art (Lhuillier E. et al., Acc. Chem. Res., 2015, 48 (1), pp 22-30; Pedetti S. et al., J. Am. Chem. Soc., 2014, 136 (46), pp 16430-16438; Ithurria S. et al., J. Am. Chem. Soc., 2008,130,16504-16505; Nasilowski M. et al., Chem. Rev. 2016, 116, 10934-10982).

The CdSe nanoparticles were treated by the method disclosed in WO2018/220165 with aluminum tert-butoxyde and zirconium tetra propoxide precursors leading to a matrix of composition Al_{6/17}Zr_{4/17}O, comprising 60 at% of aluminium and 40 at% of zirconium, in which CdSe nanoparticles are embedded. The loading charge of CdSe nanoparticles in the composite particles is set to 0.5%.

CdSe@ Al_{6/17}Zr_{4/17}O composite particles are then placed in the AccTEST1 conditions and power of fluorescent light during ageing is measured with 450 nm blue light irradiation. Finally, T90 is determined.

### Examples 2-20.

Exemple 1 is reproduced with the composite particles defined in the following table II:

**Table II**

| Nanoparticles | Matrix | | | Loading charge | Ageing test | T90 |
|---|---|---|---|---|---|---|
| | x | y | z (M) | | | |
| CdSe dots - 5 nm | 6/17 | 4/17 | 0 | 0.5% | AccTEST1 | >2500h |
| ZnSe dots - 5 nm | 2/9 | 1/3 | 0 | 5% | AccTEST1 | >2500h |
| Core/shell/shell nanoplatelets A | 6/17 | 4/17 | | 1.5% | AccTEST1 | >2500h |
| Core/shell/shell nanoplatelets B | 1/20 | 9/20 | 0.017 (Hf) | 2% | AccTEST1 | >2500h |
| Core/shell/shell nanospheres C | 6/17 | 4/17 | 0 | 1% | AccTEST1 | >2500h |
| Core/shell/shell nanospheres D | 2/5 | 1/5 | 0 | 15% | AccTEST1 | >2500h |
| Core/shell/shell nanoplatelets E | 6/17 | 4/17 | 0 | 3% | AccTEST1 | >2500h |
| Core/shell/shell nanospheres F | 2/5 | 1/5 | 0 | 1% | AccTEST1 | >2500h |
| Core/shell nanospheres G | 6/17 | 4/17 | 0 | 2% | AccTEST1 | >2500h |
| Core/shell nanospheres H | 1/10 | 17/40 | 0 | 15% | AccTEST1 | >2500h |
| Core/shell/shell nanoparticles I | 8/15 | 1/10 | 0 | 15% | AccTEST1 | >2500h |
| Core/shell/shell nanoplatelets J | 1/40 | 77/60 | 0 | 10% | AccTEST1 | >2500h |
| Core/shell nanospheres K | 1/20 | 9/20 | 0.017 (Si) | 15% | AccTEST1 | >2500h |
| Core/shell nanoparticles L | 2/9 | 1/3 | 0 | 15% | AccTEST1 | >2500h |
| Core/shell nanoparticles M | 2/5 | 1/5 | 0 | 12% | AccTEST1 | >2500h |
| Core/shell/shell nanoparticles N | 1/20 | 9/20 | 0.017 (Ti) | 15% | AccTEST1 | >2500h |
| Core/shell/shell nanoparticles O | 1/40 | 9/20 | 0.031 (Ti) | 15% | AccTEST1 | >2500h |
| Mixture of Core/shell/shell nanoplatelets A (1.5%) and J (10%) | 1/10 | 17/40 | 0 | 11.5% | AccTEST1 | >2500h |
| Mixture of Core/shell/shell nanospheres F (1%) and Core/shell nanoparticles M (12%) | 8/15 | 1/10 | 0 | 13% | AccTEST1 | >2500h |

Core/shell/shell nanoplatelets A: CdSe_{0.45}S_{0.55}/Cd_{0.30}Zn_{0.70}S/ZnS, with a core of thickness 1.2 nm and a lateral dimension, *i.e.*, length or width, greater than 8 nm and shells of thicknesses 2.5 nm and 2 nm, emitting red fluorescent light.

Core/shell/shell nanoplatelets B: CdSe_{0.72}S_{0.28}/CdS/ZnS, with a core of thickness 1.2 nm and a lateral dimension, *i.e.*, length or width, greater than 8 nm and shells of thicknesses 3.5 nm and 0.5 nm, emitting red fluorescent light.

Core/shell/shell nanospheres C: CdSe/CdS/ZnS, with a core of diameter 4.5 nm and shell thicknesses of 1.5 nm and 1 nm, emitting red fluorescent light.

Core/shell/shell nanospheres D: CdSe/ZnSe/ZnS, with a core of diameter 4.5 nm and shell thicknesses of 1.5 nm and 1 nm, emitting green fluorescent light.

Core/shell/shell nanoplatelets E: CdSe_{0.72}S_{0.28}/ZnSe/ZnS, with a core of thickness 1.2 nm and a lateral dimension, *i.e.*, length or width, greater than 8 nm and shells of thicknesses 3.5 nm and 0.5 nm, emitting red fluorescent light.

Core/shell/shell nanoparticles F: InP/ZnSe/ZnS with a core of diameter 4.0 nm and shell thicknesses of 2 nm and 1 nm, emitting red fluorescent light.

Core/shell/shell nanoparticles G: InP/ZnSe/ZnS with a core of diameter 3.0 nm and shell thicknesses of 2 nm and 1 nm, emitting red fluorescent light.

Core/shell/shell nanoparticles H: InP/ZnSe/ZnS with a core of diameter 2.5 nm and shell thicknesses of 1.5 nm and 1.25 nm, emitting green fluorescent light.

Core/shell/shell nanoparticles I: InP/ZnSe/ZnS with a core of diameter 2.5 nm and shell thicknesses of 2.75 nm and 2.50 nm, emitting green fluorescent light.

Core/shell/shell nanoplatelets J: CdSe_{0.10}S_{0.90}/ZnS/Cd_{0.20}Zn_{0.80}S, with a core of thickness 1.5 nm and a lateral dimension, *i.e.*, length or width, greater than 10 nm and shells of thicknesses 1 nm and 2.5 nm, emitting green fluorescent light.

Core/shell nanospheres K: CdSe_{0.10}S_{0.90}/ZnS, with a core of diameter 4 nm and shell thickness of 1 nm, emitting green fluorescent light.

Core/shell nanoparticles L: InP/ZnS, having a diameter of 3.5 nm, emitting green fluorescent light.

Core/shell nanoparticles M: InP/ZnSe, having a diameter of 4.4 nm, emitting green fluorescent light.

Core/shell/shell nanoparticles N: InP/GaP/ZnS, having a diameter of 7.2 nm, emitting green fluorescent light.

Core/shell/shell nanoparticles O: InP/ZnSe/ZnS, having a diameter of 7.4 nm, emitting green fluorescent light.

### Comparative Example C1

Exemple 1 is reproduced except for the nature of the matrix: nanoparticles are encapsulated in pure silica (SiO₂) with a comparable method - use of silicon alkoxide instead of other metal alkoxides. Under AccTEST1 conditions, T90 was measured below 500 hours.

### Example 21: light converting element

A film is extruded and shaped to form a 1.5 mm thick film from the following composition: 0.165 g of Core/shell/shell nanospheres C - emitting red fluorescent light - encapsulated in Aluminum/Zirconium matrix - equivalent to 35 ppm of nanoparticles in the film - and 0.165 g of Core/shell/shell nanospheres D - emitting green fluorescent light - encapsulated in Aluminum/Zirconium matrix - equivalent to 250 ppm of nanoparticles in the film - are mixed with 100 g polystyrene. 1 g of scattering particles - nano TiO₂ - is added in order to obtain a haze of the final film about 70%. When irradiated with blue light of wavelength 450 nm, the film allows some blue light to traverse - without absorption - and some blue light is absorbed then fluoresced in green and red light, leading globally to a homogenous white source.

Under accelerated ageing condition AccTEST1, quality of white source - hue, chroma, gamut, intensity - remains stable over more than 2500 hours, *i.e.*, parameters of white source vary of less than 10% of their initial values.

## Claims

1. A composite particle (2) comprising nanoparticles (1) dispersed in a matrix wherein :
• the nanoparticles (1) are semi-conductive nanoparticles ; and
• the matrix is a metal oxide compound of formula
AlₓZr_{y}M_{z}O (I)
wherein M represents one or more metal elements selected from the group of Si, Ti, Hf, Ge, Sn, or mixtures thereof;
wherein x, y and z respectively represent the stoichiometric ratios of Aluminum, Zirconium and other metal elements;
x is in the range from 0 to 3/5;
y is in the range from 1/20 to 1/2; and
z is in the range from 0 to 2/5, with the proviso that when z is zero, then (3/2x+2y)=1.

2. The composite particle (2) according to claim **1,** wherein x is in the range from 1/20 to 8/15 and y is in the range from 1/10 to 37/80, preferably x is in the range from 1/10 to 8/15 and y is in the range from 1/10 to 17/40.

3. The composite particle (2) according to claim **1** or **2,** wherein the matrix further comprises a concentration ranging from 0.1at% to 15at% of metal elements selected from Si, Ti, Hf, Ge, Sn, or mixtures thereof.

4. The composite particle (2) according to any one of claims **1** to **3,** wherein the loading charge of the nanoparticles (1) in the composite particle (2) is at least 1%, preferably at least 2.5%, more preferably at least 5%, said loading charge being the mass ratio between the mass of nanoparticles (1) comprised in a composite particle (2) and the mass of said composite particle (2).

5. The composite particle (2) according to any one of claims **1** to **4,** wherein more than 95 wt% of the nanoparticles (1) in a composite particle (2) are dispersed in the inner part of the composite particle (2), where the composite particle (2) consists of an inner part surrounded by an external layer, said external layer covering the whole inner part; said external layer representing less than 10 wt% of the composite particle (2) and said external layer having a thickness greater than or equal to 5 nm, preferably greater than or equal to 15 nm.

6. The composite particle (2) according to any one of claims **1** to **5,** wherein nanoparticles (1) are uniformly dispersed in the matrix.

7. The composite particle (2) according to any one of claims **1 to 6,** wherein aluminum oxide and zirconium oxide represent more than 90 wt% of the matrix.

8. The composite particle (2) according to any one of claims **1** to **7,** wherein the nanoparticles (1) are selected from or comprise a core selected from
• III-V semi-conductive nanoparticles, preferably phosphide quantum dots, preferably selected from the group of InP, Cd₃P₂, Zn₃P₂, AlP, GaP, TlP quantum dots; or
• I-III-VI2 semi-conductive nanoparticles, preferably selected from the group of CuInS₂, CuInSe₂, AgInS₂, AgInSe₂ quantum dots;
• II-VI semi-conductive nanoparticles, preferably selected from the group of CdSe, CdSeS, ZnSe, ZnSeS quantum dots;
• Quantum dots selected from the group of CuInZnS, CuInZnSe;
or mixtures thereof.

9. The composite particle (2) according to any one of claims **1** to **7,** wherein the nanoparticles (1) are selected from
• InP/ZnS, InP/ZnSe, InP/ZnSeₓS₍₁₋ₓ₎, InP/CdS/ZnS, InP/ZnSe/ZnS, InP/ZnSeₓS₍₁₋ₓ₎/ZnS quantum dots; or
• CuInS₂, CuInSe₂, AgInS₂, AgInSe₂ quantum dots;
• CdSe/CdS/ZnS, CdSeₓS₍₁₋ₓ₎/CdS/ZnS, CdSe/ZnSe/ZnS, CdSe/ZnSeₓS₍₁₋ₓ₎/ZnS, CdSeₓS₍₁₋ₓ₎/ZnSe/ZnS, CdₓZn₍₁₋ₓ₎Se/ZnSe/ZnS quantum dots;
or mixtures thereof.

10. A method of preparation of a composite particle (2) according to any one of claims **1** to **9,** wherein the metal oxide matrix is obtained by hydrolysis of aluminium alkoxides, zirconium alkoxides and optionally other metal alkoxides.

11. A light converting element (3) comprising:
- a plurality of composite particles (2) according to any one of claims **1** to **9,** said composite particles (2) comprising fluorescent nanoparticles (1); and
- a polymer matrix (31) in which the plurality of composite particles (2) is dispersed.

12. A light converting element (3) according to claim **11,** wherein the amount of composite particles (2) in the polymer matrix (31) is ranging from 0.05 wt% to 20 wt%, based on the weight of said light converting element (3).

13. A display comprising a light converting element (3) according to claim **11** or claim **12.**

14. A light emitting diode comprising a light converting element (3) according to claim **11** or claim **12.**

15. Use of a light converting element (3) according to claim **11** or claim **12** in a display or a light emitting diode.
